# EUROPEAN PATENT SPECIFICATION

(11) **EP 3 666 137 B1**
(45) Date of publication and mention of the grant of the patent: **24.02.2021**
(21) Application number: 19000553.8
(22) Date of filing: 10.12.2019
(51) Int. Cl.: A47J 36/32

(54) **COOKING UTENSIL WITH A TEMPERATURE INDICATOR**
KOCHUTENSIL MIT EINEM TEMPERATURANZEIGER
USTENSILE DE CUISINE DOTÉ D'UN INDICATEUR DE TEMPÉRATURE

(30) Priority: 11.12.2018 ES 201831196
(43) Date of publication of application: 17.06.2020
(73) Proprietor: Isogona, S.L., 43800 Valls (Tarragona) (ES)
(72) Inventor: Gavaldà Rius, Anton, 43800 Valls (Tarragona) (ES)
(74) Representative: Maldonado Jordan, Julia

(56) References cited:
- US-A- 5 934 181
- US-A1- 2001 032 546
- US-A1- 2006 086 258

## Description

### Technical sector

The present invention relates to a cooking utensil with a temperature indicator, comprising a cooking vessel suitable for being heated on gas cookers, glass ceramic cookers, induction cookers, or the like, and having features which are aimed at allowing the user to view information relative to the temperature of the cooking vessel during use; that is, when said cooking utensil contains the product to be cooked; and the means used for indicating the temperature can be disassociated from the cooking vessel.

### Prior art

Cooking utensils such as frying pans, pots or saucepans, comprising a cooking vessel intended for containing the product to be cooked and a fixed or detachable handle for gripping same, are well known today.

The cooking temperature of food is relevant because most of the properties of food are destroyed at temperatures higher than 300°C.

Induction cookers which perform rapid heating, with the mentioned utensils going from being cold to reaching a very high temperature in a short time, are widely used today.

Therefore, it is important to have information relative to the temperature of the cooking utensil so as to set the heat output supplied by the cooker and control the temperature of the cooking utensil.

At present, Tefal® frying pans are known, which use a system called "Thermospot" consisting of the incorporating a disc at the bottom of the cooking vessel made of a heat-sensitive material that changes colour upon reaching a predetermined temperature sufficient for cooking.

This system provides no information about the temperature of the cooking utensil, but rather it simply changes colour upon reaching a predetermined temperature.

A drawback to using this system is that the heat-sensitive disc is in a visible position only when the cooking utensil is empty, that is, during the pre-heating phase. However, while cooking food said heat-sensitive disc is hidden by the actual food contained in the vessel and provides no information whatsoever to the user, rendering it completely useless.

Therefore, while cooking food, the user has no information whatsoever about the temperature of the cooking utensil, or if said temperature is suitable for cooking, if it is insufficient, or if it exceeds the desired temperature.

Therefore, the technical problem considered is the development of a cooking utensil which provides the user with continuous information about the temperature of the vessel, and that said information remains visible while the cooking utensil is used, that is, when it contains the food to be cooked.

The applicant is unaware of the existence of cooking vessels which allow the problem considered to be solved in a satisfactory manner. A document describing the features of the preamble of claim 1 or of claim 3 is known from US2001/032546.

### Description of the invention

To solve the mentioned problems, the cooking utensil object of the present invention has been conceived as having a series of technical features which are aimed at allowing the user to access, at any time, information about the temperature or degree of heating of the vessel in that instant, that is, not only during the pre-heating phase of the vessel, but also while cooking food in same.

This cooking utensil comprises the features of claim 1 or of claim 3.

According to the invention, this cooking utensil comprises a temperature probe fixed to the cooking vessel, or built into same, which provides an electric signal proportional to the temperature of the vessel; temporary electric connection means for connecting said temperature probe to an electronic device which remains in a visible position during the use of the cooking utensil and provides information about the temperature of the vessel based on the electric signal provided by the temperature probe.

It should be mentioned that the element referred to as "temperature probe" can be a thermocouple or any other transducer capable of providing an electric signal proportional to the heating temperature of the vessel to the electronic device.

The electric connection means comprises first electrical contacts connected to the temperature probe and second electrical contacts connected to the electronic temperature display device and suitable for establishing electrical contact with first contacts of the temperature probe.

These first and second contacts allow the electronic display device of the cooking vessel to be disconnected and separated, so as to prevent it from deteriorating during the cleaning or washing of said vessel.

The electronic temperature display device of the vessel is foreseen to comprise at least one electric battery, which is either replaceable and/or rechargeable.

In a first embodiment, the vessel comprises a fixed handle provided with a cavity for the detachable coupling of the electronic device, which allows the electronic device to be removed so as to prevent the deterioration thereof during the cleaning of the utensil or when it is not in use.

In this embodiment, the first electrical contacts are arranged in the cavity of the handle, an electrical connection of the temperature probe with the electronic temperature display device of the vessel being established when said electronic device is coupled in the cavity of the handle.

To facilitate the assembly and detachment of the electronic device with respect to the cavity of the fixed handle, the utensil has complementary quick coupling and uncoupling means, for example magnetic or clip-type means.

The cavity of the handle has a hole or recess for acting on the electronic device and detaching same from the handle.

In a variant embodiment of the invention, the first electrical contacts are fixed to the cooking vessel; and the electronic temperature display device, together with the second pins, are built into a handle, grip, lid, or any other accessory of the cooking utensil which can be separated from the cooking vessel, said electrical connection pins being arranged in positions suitable to automatically establish the interconnection thereof during the coupling of said accessory with the cooking vessel.

With the aforementioned features, this cooking utensil provides continuous information to the user about the temperature of the vessel, regardless of whether the cooking vessel is empty or in use.

It should be mentioned that the information about the temperature provided on the display of the electronic device can be numerical, expressed by means of a scale of colours, or of any other type, since it does not affect the essence of the invention.

### Brief description of the content of the drawings

To complement the description that is being made and for the purpose of better understanding the features of the invention, a set of drawings is attached to the present specification in which the following is depicted in an illustrative and non-limiting manner:
- Figure 1 shows a schematic plan view of an embodiment of the cooking utensil according to the invention, depicted in this case by a frying pan with a fixed handle and with the electronic temperature display device detachable from the handle.
- Figures 2 and 3 show respective partial top perspective and partial bottom perspective views of the utensil in the preceding figure, with the electronic device detached from the handle
- Figure 4 shows a schematic perspective view of a variant embodiment of the cooking utensil according to the invention, depicted in this case by a frying pan provided with a detachable handle with the electronic temperature indicator device for the vessel built into same.
- Figure 5 shows a perspective view of the cooking utensil of figure 4 with the handle detached.
- Figure 6 shows a cross section of a partial elevational view of the cooking utensil in the preceding figure with the handle detached.

### Detailed description of embodiments of the invention

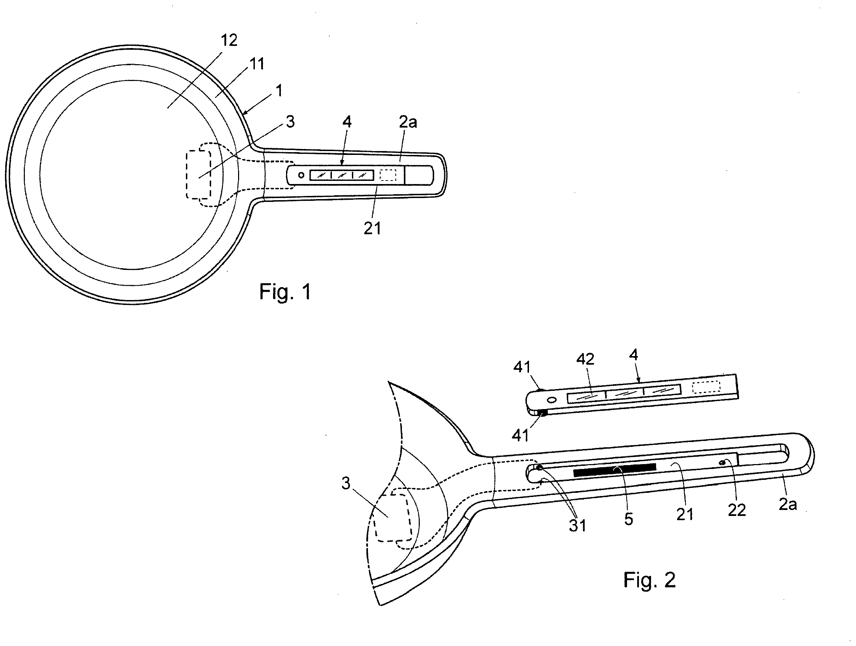

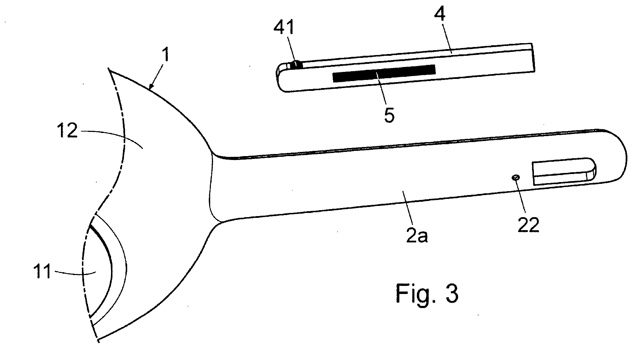

In the embodiment shown in figures 1 to 3, the cooking utensil with a temperature indicator is depicted by a frying pan, provided with a fixed handle, suitable for being heated on a gas cooker, glass ceramic cooker, induction cooker, or the like. Said cooking utensil comprises a cooking vessel (1) having a base (11) and a side wall (12), and a fixed handle (2a) (non-detachable).

The vessel (1) comprises a temperature probe (3) built into the base (11) and which provides an electric signal, proportional to the temperature of the cooking vessel (1), to first electrical connection contacts (31) housed in a cavity (21) of the fixed handle.

This cavity (21) is suitable for the detachable coupling of an electronic temperature indicator device (4) for the vessel (1), which is provided with second contacts (41) establishing an electrical connection with the first contacts (31), the connection of the temperature probe (3) with the electronic device (4) being established when said electronic device (4) is coupled in the cavity (21) of the handle, as shown in figure 1.

The electronic device (4) incorporates an internal battery and has a display (42) which, in the operative coupled position of said electronic device in the cavity (21) of the handle, shows visual information, for example by means of a colour scale, about the temperature of the vessel (1) based on the electric signal received from the temperature probe (3).

This utensil has complementary quick coupling and uncoupling means (5), in this case magnetic, for assembling the electronic device (4) in the cavity (21) of the fixed handle (2a).

In this embodiment, the cavity (21) of the fixed handle (2a) has a hole (22) or recess for acting on the electronic device and moving it in a direction to detach it from the fixed handle (2a).

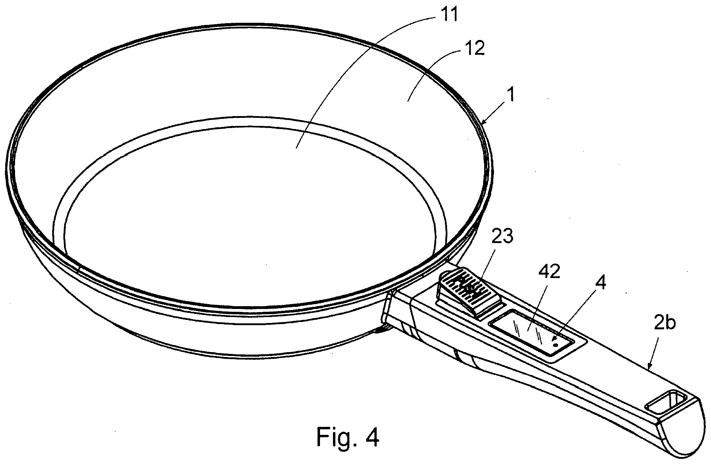

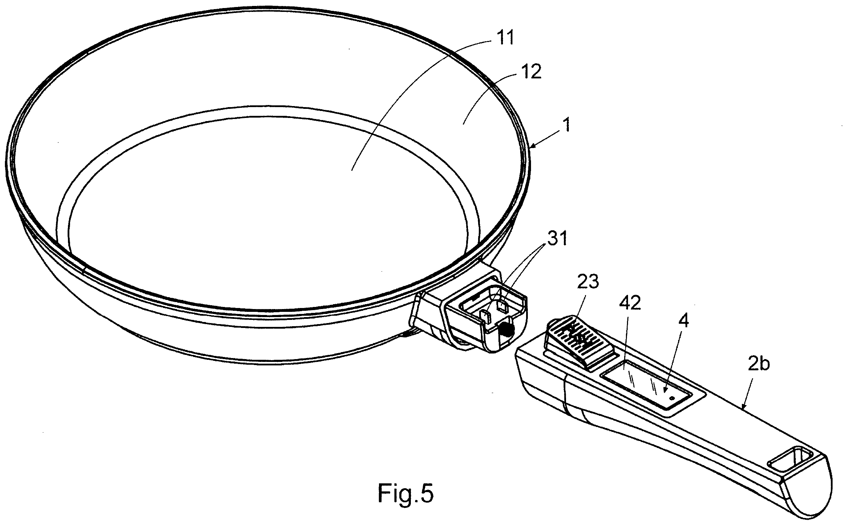

In the embodiment variant shown in figures 4 to 6, the cooking utensil is depicted by a frying pan which, as in the preceding example, comprises a cooking vessel (1) having a base (11) and a side wall (12).

In this case, the cooking utensil has a detachable handle (2b) with respect to the cooking vessel (1) which is provided with engagement means (23) of any type for the fixing or release thereof with respect to the cooking vessel (1).

In this embodiment, the first contacts (31) are fixed to the vessel (1), namely in the coupling area for the detachable handle (2b).

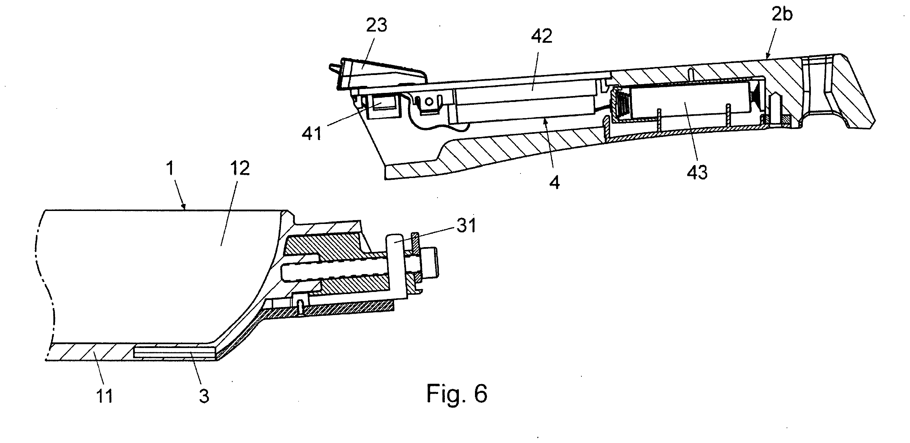

As seen in figure 6, the electronic temperature display device (4), provided with the second electrical connection contacts (41) and the display (42), is built into the detachable handle (2b) and is powered by a replaceable and/or rechargeable battery (43).

The first electrical connection contacts (31) and second electrical connection contacts (41) are arranged in positions suitable for making contact with and connecting the temperature probe (3) to the electronic temperature indicator device (4) when the detachable handle (2b) is mechanically coupled to the vessel (1) of the cooking utensil.

The electronic device (4) is thereby built into a handle which is necessary for handling the cooking utensil, allowing the replacement of only the electronic device (4), or of the detachable handle (2b) together with the electronic device (4), in the event of deterioration or breaking; without having to acquire a new entire cooking utensil.

In the embodiments shown, the electronic device (4) always remains visible in the use position and can be separated from the vessel (1) and disconnected from the temperature probe (3) either by extracting it through the cavity (21) in the case of a fixed handle (2a), or by disengaging the detachable handle (2b) with respect to the vessel (1).

Having sufficiently described the nature of the invention as well as a preferred embodiment, it is hereby stated for all relevant purposes that the materials, shape, size and arrangement of the described elements may be modified provided that this does not entail an alteration of the essential features of the invention claimed below.

## Claims

1. A cooking utensil, comprising a vessel (1) for cooking food provided with a base (11) and a side wall (12) and suitable for being heated on gas cookers, glass ceramic cookers, induction cookers, or the like, comprising:
- a temperature probe (3), built into or fixed to the vessel (1), which provides an electric signal proportional to the temperature of said vessel (1);
- electric connection means for connecting said temperature probe (3) with an electronic temperature indicator device (4), able to be separated from the vessel (1), which remains in a visible position during the use of the cooking utensil and provides visual information relative to the temperature of the vessel (1) based on the electric signal provided by the temperature probe (3);
wherein the electric connection means further comprises: first electrical contacts (31) connected to the temperature probe (3) and second electrical contacts (41) connected to the electronic temperature display device (4);
**characterised in that** said cooking utensil comprises: a non-detachable fixed handle (2a) provided with a cavity (21) for the detachable coupling of the electronic device (4) and complementary quick coupling and uncoupling means (5) of the electronic device (4) with respect to the cavity (21) of the fixed handle (2a); and the first contacts (31) are housed in the cavity (21) of the fixed handle (2a); an electrical connection of the temperature probe (3) with the electronic device (4) being established when said electronic device (4) is coupled in the cavity (21) of the fixed handle (2a).

2. The utensil according to claim 1, wherein the cavity (21) of the fixed handle (2a) has a hole (22) or recess for acting on the electronic device (4) and detaching same from said fixed handle (2a).

3. A cooking utensil, comprising a vessel (1) for cooking food provided with a base (11) and a side wall (12) and suitable for being heated on gas cookers, glass ceramic cookers, induction cookers, or the like, comprising:
- a temperature probe (3), built into or fixed to the vessel (1), which provides an electric signal proportional to the temperature of said vessel (1);
- electric connection means for connecting said temperature probe (3) with an electronic temperature indicator device (4), able to be separated from the vessel (1), which remains in a visible position during the use of the cooking utensil and provides visual information relative to the temperature of the vessel (1) based on the electric signal provided by the temperature probe (3);
wherein the electric connection means comprises: first electrical contacts (31) connected to the temperature probe (3) and second electrical contacts (41) connected to the electronic temperature display device (4);
**characterised in that** the first electrical contacts are fixed to the cooking vessel (1); and the electronic device (4), provided with the second contacts (41), is built into a detachable handle (2b), a lid, or another accessory provided with detachable engagement means (23) for engaging the cooking vessel (1); the connection of the first contacts (31) and the second contacts (41) being automatically established during the coupling of said detachable handle (2b), lid or accessory with the cooking vessel (1).

## Patentansprüche

1. Kochutensilie, umfassend ein Gefäß (1) zum Kochen von Lebensmitteln, das mit einem Boden (11) und einer Seitenwand (12) bereitgestellt ist und zum Erwärmen auf Gaskochern, Glaskeramikkochern, Induktionskochern oder dergleichen geeignet ist, umfassend:
- eine Temperatursonde (3), die in das Gefäß (1) eingebaut oder daran befestigt ist, die ein elektrisches Signal bereitstellt, das proportional zu der Temperatur des Gefäßes (1) ist;
- ein elektrisches Anschlussmittel zum Verbinden der Temperatursonde (3) mit einer vom Gefäß (1) trennbaren elektronischen Temperaturanzeigevorrichtung (4), die während der Verwendung der Kochutensilie in sichtbarer Position bleibt und visuelle Informationen relativ zur Temperatur des Gefäßes (1) basierend auf dem von der Temperatursonde (3) bereitgestellten elektrischen Signal bereitstellt;
wobei das elektrische Anschlussmittel ferner umfasst: erste elektrische Kontakte (31), die mit der Temperatursonde (3) verbunden sind, und zweite elektrische Kontakte (41), die mit der elektronischen Temperaturanzeigevorrichtung (4) verbunden sind;
**dadurch gekennzeichnet, dass** die Kochutensilie umfasst: einen nicht abnehmbaren festen Griff (2a), der mit einem Hohlraum (21) zum abnehmbaren Koppeln der elektronischen Vorrichtung (4) und komplementären Schnellkopplungs- und Entkopplungsmitteln (5) der elektronischen Vorrichtung (4) in Bezug auf den Hohlraum (21) des festen Griffs (2a) bereitgestellt ist; und die ersten Kontakte (31) in dem Hohlraum (21) des festen Griffs (2a) untergebracht sind; einen elektrischen Anschluss der Temperatursonde (3) mit der elektronischen Vorrichtung (4), der hergestellt wird, wenn die elektronische Vorrichtung (4) in dem Hohlraum (21) des festen Griffs (2a) gekoppelt ist.

2. Utensilie nach Anspruch 1, wobei der Hohlraum (21) des festen Griffs (2a) ein Loch (22) oder eine Vertiefung für das Einwirken auf die elektronische Vorrichtung (4) und das Abnehmen davon von dem festen Griff (2a) aufweist.

3. Kochutensilie, umfassend ein Gefäß (1) zum Kochen von Lebensmitteln, das mit einem Boden (11) und einer Seitenwand (12) bereitgestellt ist und zum Erwärmen auf Gaskochern, Glaskeramikkochern, Induktionskochern oder dergleichen geeignet ist, umfassend:
- eine Temperatursonde (3), die in das Gefäß (1) eingebaut oder daran befestigt ist, die ein elektrisches Signal bereitstellt, das proportional zu der Temperatur des Gefäßes (1) ist;
- ein elektrisches Anschlussmittel zum Verbinden der Temperatursonde (3) mit einer vom Gefäß (1) trennbaren elektronischen Temperaturanzeigevorrichtung (4), die während der Verwendung der Kochutensilie in sichtbarer Position bleibt und visuelle Informationen relativ zur Temperatur des Gefäßes (1) basierend auf dem von der Temperatursonde (3) bereitgestellten elektrischen Signal bereitstellt;
wobei das elektrische Anschlussmittel umfasst: erste elektrische Kontakte (31), die mit der Temperatursonde (3) verbunden sind, und zweite elektrische Kontakte (41), die mit der elektronischen Temperaturanzeigevorrichtung (4) verbunden sind;
**dadurch gekennzeichnet, dass** die ersten elektrischen Kontakte an dem Kochgefäß (1) befestigt sind; und die elektronische Vorrichtung (4), die mit den zweiten Kontakten (41) bereitgestellt ist, in einen abnehmbaren Griff (2b), einen Deckel oder ein anderes Zubehör, das mit abnehmbaren Eingriffsmitteln (23) zum Eingreifen in das Kochgefäß (1) bereitgestellt ist, eingebaut ist; die Verbindung der ersten Kontakte (31) und der zweiten Kontakte (41) automatisch während der Kopplung des abnehmbaren Griffs (2b), Deckels oder Zubehörs mit dem Kochgefäß (1) hergestellt wird.

## Revendications

1. Ustensile de cuisine, comprenant un récipient (1) pour la cuisson des aliments pourvu d'une base (11) et d'une paroi latérale (12) et adapté pour être chauffé sur des cuisinières à gaz, des cuisinières en vitrocéramique, des cuisinières à induction, ou similaires, comprenant :
- une sonde de température (3), intégrée ou fixée au récipient (1), qui fournit un signal électrique proportionnel à la température dudit récipient (1) ;
- des moyens de connexion électrique pour connecter ladite sonde de température (3) à un dispositif électronique indicateur de température (4), pouvant être séparé du récipient (1), qui reste dans une position visible pendant l'utilisation de l'ustensile de cuisine et fournit des informations visuelles relatives à la température du récipient (1) sur la base du signal électrique fourni par la sonde de température (3) ;
dans lequel les moyens de connexion électrique comprennent en outre : des premiers contacts électriques (31) connectés à la sonde de température (3) et des deuxièmes contacts électriques (41) connectés au dispositif électronique d'affichage de température (4) ;
**caractérisé en ce que** ledit ustensile de cuisine comprend : une poignée fixe non détachable (2a) pourvue d'une cavité (21) pour le couplage détachable du dispositif électronique (4) et des moyens complémentaires de couplage et de découplage rapides (5) du dispositif électronique (4) par rapport à la cavité (21) de la poignée fixe (2a) ; et les premiers contacts (31) sont logés dans la cavité (21) de la poignée fixe (2a) ; une connexion électrique de la sonde de température (3) avec le dispositif électronique (4) étant établie lorsque ledit dispositif électronique (4) est couplé dans la cavité (21) de la poignée fixe (2a).

2. Ustensile selon la revendication 1, dans lequel la cavité (21) de la poignée fixe (2a) a un trou (22) ou un évidement pour agir sur le dispositif électronique (4) et le détacher de ladite poignée fixe (2a).

3. Ustensile de cuisine, comprenant un récipient (1) pour la cuisson des aliments pourvu d'une base (11) et d'une paroi latérale (12) et adapté pour être chauffé sur des cuisinières à gaz, des cuisinières en vitrocéramique, des cuisinières à induction, ou similaires, comprenant :
- une sonde de température (3), intégrée ou fixée au récipient (1), qui fournit un signal électrique proportionnel à la température dudit récipient (1) ;
- des moyens de connexion électrique pour connecter ladite sonde de température (3) à un dispositif électronique indicateur de température (4), pouvant être séparé du récipient (1), qui reste dans une position visible pendant l'utilisation de l'ustensile de cuisine et fournit des informations visuelles relatives à la température du récipient (1) sur la base du signal électrique fourni par la sonde de température (3) ;
dans lequel les moyens de connexion électrique comprennent : des premiers contacts électriques (31) connectés à la sonde de température (3) et des deuxièmes contacts électriques (41) connectés au dispositif électronique d'affichage de température (4) ;
**caractérisé en ce que** les premiers contacts électriques sont fixés au récipient de cuisine (1) ; et le dispositif électronique (4), pourvu des deuxièmes contacts (41), est intégré dans une poignée détachable (2b), un couvercle, ou un autre accessoire pourvu de moyens détachables de mise en prise (23) pour mettre en prise le récipient de cuisine (1) ; la connexion des premiers contacts (31) et des deuxièmes contacts (41) étant établie automatiquement lors du couplage de ladite poignée détachable (2b), du couvercle ou accessoire avec le récipient de cuisine (1).
